Europäisches Patentamt

European Patent Office

Office européen des brevets

(19)

(11) **EP 1 116 511 A1**

(12) **EUROPEAN PATENT APPLICATION**

(43) Date of publication:
**18.07.2001 Bulletin 2001/29**

(51) Int Cl.$^7$: **B01D 53/50**, B01D 53/86, C01B 17/60

(21) Application number: **00200168.3**

(22) Date of filing: **17.01.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicants:<br>• **Gastec N.C.**<br>  **7327 AC Apeldoorn (NL)**<br>• **Stork Engineers & Contractors B.V.**<br>  **1043 NT Amsterdam (NL)** | (72) Inventors:<br>• **De Wit, Ellart Kostijn**<br>  **3554 CS Utrecht (NL)**<br>• **Van Yperen, Renee**<br>  **6961 PL Eerbeek (NL)**<br>• **Borsboom, Johannes**<br>  **2282 VC Rijswijk (NL)**<br><br>(74) Representative: **Ottevangers, Sietse Ulbe et al**<br>  **Vereenigde,**<br>  **Postbus 87930**<br>  **2508 DH Den Haag (NL)** |

(54) **Method for removing sulfur compounds from gas mixtures**

(57)     The invention relates to a method for removing sulfur compounds from gas mixtures containing sulfur compounds, which comprises the at least partial oxidation of the sulfur compounds to oxidic sulfur compounds, at least part of which is converted to $SO_3$, and the absorption of the resulting oxidic sulfur compounds on a suitable absorbent, whereby in case the oxidation takes place catalytically in one bed of catalyst and absorbent, the catalyst is not based on a metal from the platinum group.

EP 1 116 511 A1

**Description**

The present invention relates to the removal of sulfur compounds from gas mixtures which contain these sulfur compounds.

The necessity of removing sulfur compounds from gases which are further treated in chemical processes, supplied to buyers or discharged into the atmosphere, is generally known. In particular, this involves sulfur compounds in the form of $H_2S$ and mercaptanes, but also other types of sulfur compounds, including $SO_2$, must be removed.

Gases from chemical and biological processes, as well as flue gases are formed when burning fossil fuels or biomass, often contain substantial amounts of sulfur compounds. Legislation in the field of the environment no longer permits the discharge of these compounds into the atmosphere. A large number of methods are available for the removal of sulfur compounds. Typical techniques for the purification of gases which still contain minor amounts of contaminants in the form of sulfur compounds are characterized by washing the gas with physical and/or chemical solvents. It is also known to absorb the sulfur compounds on solid absorbents, such as calcium oxide, activated carbon or hydrated iron oxide. A large number of these purification methods is not regenerative, which has the result that the loaded absorbents must be dumped. This constitutes a waste problem.

The majority of the regenerative methods, however, have the disadvantage that during the regeneration a gas stream with undesirable sulfur compounds is formed again, which gas stream has a low economic value.

The past few years have shown much development in the provision of processes in which during the regeneration $H_2S$ or $SO_2$ is obtained in concentrated form. $H_2S$ and $SO_2$ may be further processed into sulfur, for instance in the Claus process. $SO_2$ may also serve as feed for sulfuric acid production. Both sulfur and sulfuric acid are widely applied in the industry.

American patent 5,516,498, for instance, discloses the removal of sulfur dioxide from gas streams wherein the gas stream is contacted with a copper-containing acceptor consisting of finely divided copper on a thermostable inert carrier. After the acceptor has been loaded completely, it is contacted with a reducing gas whereby a concentrated $SO_2$-containing gas stream is obtained. In particular at higher contents of copper on the carrier it is found that the amount of $SO_2$ absorbed by the copper is too low in relation to the amount of absorbing material.

Other methods for removing sulfur compounds are based on absorption of the sulfur compounds in suitable chemical and/or physical solvents, which are then regenerated.

The present invention is in the field of the removal of sulfur compounds in oxidized form, which oxidized sulfur compounds are absorbed on a suitable absorbent. Hereby it is of special importance that the absorbent remains simply and properly loadable even after repeated regeneration. In fact, it has been found that this may sometimes constitute a problem, because after a number of regeneration steps many absorbents absorb increasingly less or no longer absorb at all. It is, inter alia, an object of the invention to provide a system in which this problem does not occur or occurs in but a minor degree.

A further object is to provide a method wherein the absorption can occur more rapidly and to a higher loading degree.

The present invention is based on the surprising insight that when the sulfur compounds are converted at least partly to $SO_3$, the absorbent shows a substantially increased absorption, in particular at a high loading degree of the absorbent on a carrier. The background thereof not quite clear, but it is supposed that the presence of $SO_3$ contributes to bulk sulfation of the absorbent, versus surface sulfation in the conventional methods.

The present invention therefore relates to a method for removing sulfur compounds from gas mixtures containing sulfur compounds, which comprises the at least partial oxidation of the sulfur compounds to oxidic sulfur compounds, at least part of which is converted to $SO_3$, and the absorption of the resulting oxidic sulfur compounds on a suitable absorbent, whereby in case the oxidation occurs catalytically in one bed of catalyst and absorbent, the catalyst is not based on a metal from the platinum group (such as platinum or palladium).

Surprisingly, it has been found that the result of the method according to the invention is that the loading of the absorbents is substantially higher, before the content of sulfur compounds in the purified gas exceeds the emission limits applicable to the process, than in a method wherein no oxidation of the sulfur compounds to $SO_3$ takes place. Of importance is that the oxidation of the sulfur compounds at least partly occurs to $SO_3$. In fact, it has been found that in such a case the absorption capacity of the absorbent is very strongly increased. In general, a conversion of at least 1 % (atomic) of the sulfur compounds to $SO_3$ is already sufficient to attain this object. It is preferred, however, if in the gas at least 5 % of the sulfur is converted to $SO_3$, more in particular at least 10 %.

Surprisingly, it has been found that through the presence of $SO_3$ the metal oxide particles are much more active for absorption and that there are much fewer problems with deactivation of the absorbent through repeated regeneration.

The method according to the present invention is applicable to the removal of sulfur compounds from gas streams. This may involve all types of sulfur compounds, in reduced form, in oxidized form, or as elementary sulfur. More in particular, the method according to the invention is suitable for the removal of sulfur compounds from Claus or Superclaus™ tail gas or from flue gases. Tail gas substantially contains $H_2S$, elementary sulfur and $SO_2$, while flue gases particularly contain sulfur compounds in the form of $SO_2$. The invention, however, is also applicable to other gas streams containing sulfur compounds.

When carrying out the method according to the invention, it is essential that the sulfur compounds are converted to an oxidized form, more in particular at least partly to $SO_3$. In case the gas stream contains yet other sulfur compounds than $SO_2$, these sulfur compounds will generally first be converted to $SO_2$ in an (after) burner. Subsequently, the $SO_2$ is preferably completely or partly converted to $SO_3$ by passing the gas stream over a catalyst bed of an oxidation catalyst in the presence of molecular oxygen (air or oxygen still present in the gas stream).

As catalyst, the conventional oxidation catalysts can be used. Examples thereof are catalysts based on vanadium pentoxide, iron oxide, copper-bismuth oxide or noble metal. If desired, the catalyst may also be promoted, for instance with alkali metal. These materials are preferably arranged on a carrier which hardly, if at all, reacts with sulfur oxides, that is to say which is inert with respect to the formation of sulfate. Examples of suitable carrier materials are silica, aluminum phosphate and zirconia. The amount of catalytically active material strongly depends on the nature and activity of the material. Noble metal will generally be present in an amount of 0.01 to 5 wt.%, based on the weight of the catalyst with carrier. Non-noble metal catalysts generally contain more catalytically active material, approximately of the order of 1 to 50 wt.%.

The catalytic oxidation preferably takes place at a temperature of 250-550°C.

It is also possible, however, to carry out the oxidation thermally (flame). Hereby it is of importance that the conditions are so selected that sufficient $SO_3$ is formed. This can be achieved by the selection of the amount of oxygen and further conditions, such as temperature and residence time.

The absorbent for the oxidized sulfur compounds must be suitable for the absorption of oxidic sulfur compounds, through the formation of metal sulfates, but it is also of importance that the absorbent can be regenerated again by means of a suitable reducing treatment. Examples of materials suitable as absorbent are the oxides of iron, cerium and copper, if desired also in combination, preferably arranged on a carrier. In that case the loading degree of the carrier with metal oxide may vary from 1 wt.% to 75 wt.% metal oxide. The effect of the invention is clearly noticeable particularly at loading degrees of 10 wt.% and more. As carrier, there is preferably used a carrier material which hardly, if at all, reacts with sulfur oxides, that is to say which is inert with respect to the formation of sulfate. Examples of suitable carrier materials are silica, aluminum phosphate and zirconia.

The active form of the absorbent is the oxidic form, which means that previous to the absorption an oxidation of the absorbent must often take place. This oxidation may occur at a temperature of 250 to 550°C, in the presence of oxygen (air) or, depending on the procedure, the oxygen in the gas to be purified.

Subsequently, the gas stream to be treated can be passed over the absorbent, preferably at the same temperature, whereby the oxidic sulfur compounds are absorbed to form metal sulfate. This means that the gas must also contain an at least stoichiometric amount of oxygen for the oxidation to sulfate. In general, this oxygen will already be present in the gas from the original gas stream, or through the preceding oxidation.

If the absorbent is completely or nearly completely loaded, the gas stream to be treated is passed to a bed with regenerated absorbent. Subsequently, the loaded absorbent is regenerated through reduction, for instance by a reducing gas, such as $H_2$, CO or a mixture thereof. As reducing gas, there may also be used a hydrocarbon, such as natural gas or a mixture of hydrocarbons, optionally after complete or partial substoichiometric (partial) oxidation and/or reforming. Depending on the nature of the reducing gas, the reduction temperature is selected. From considerations of control technology and energy technology, it is preferred to carry out the regeneration at the same temperature as the oxidation and/or the absorption. Also advantageous are the short cycle times applicable through this and the reduction of stress and material fatigue.

The catalytic oxidation and the absorption may be carried out in various ways. In a first variant, the oxidation catalyst and the absorbent are arranged in two separate reactors, whereby after the oxidation the gas stream is passed to the bed with absorbent. Preferably, two or more separate reactors with absorbent are used, so that one bed is used as absorber, -while the other is regenerated.

In another embodiment, the catalyst and the absorbent are located in the same reactor. This can be realized, for instance, by arranging the catalyst and the absorbent in the reactor as separate layers. When the reactor is flown through downwardly, the catalyst is arranged on the absorbent as a layer. It is also possible to use the catalyst and the absorbent in mixed condition. In that case, however, no noble metal catalyst is used as catalyst.

In the practical embodiment of the regeneration and oxidation a number of variants can be distinguished. An important embodiment is characterized in that the regeneration and oxidation occur in a substantially closed circulation system provided with pressure-regulated discharge, whereby a burner arranged in the system, which burner is fed with hydrocarbon (for instance natural gas) and air, provides heating and feeding of reducing gas to the recirculation system by means of partial oxidation or substoichiometric combustion. When the regeneration starts, oxygen is removed from the circulation system by combustion of hydrocarbon(s) in the in-line burner whereby the external supply of oxygen is minimal. Subsequently, a rapid regeneration with a relatively large amount of reducing gas may take place, without formation of explosive gas mixtures in the circulation system.

In general, it is preferred to carry out the regeneration at a temperature of 250 to 550°C.

After termination of the regeneration the ratio of oxygen/hydrocarbon to the burner is slowly changed, so that the recirculation gas is going to contain excess oxygen (eventually no reducing gas anymore), but preferably not more than about 1 vol.%. This has the result that the reduced absorbent is oxidized and made suitable for a new absorption cycle. The advantage of this method is that there is no need for rinsing the circulation system with externally supplied inert gas of the system to prevent the presence of an explosive system.

If no burner is used in the recirculation system, hydrocarbon or another reducing gas is first supplied to the system, which is then replaced by an oxygen-containing gas. Hereby it is of importance, however, that the concentration of reducing gas is so low that no explosive mixture is formed.

In an alternative embodiment for the regeneration there is used a separate unit for the regeneration of a reducing gas, in which hydrocarbon or carbon is substoichiometrically burned to form $H_2$ and CO in a burner. The flame is cooled with steam to a suitable temperature (1250-1600°C).

The combustion gases are cooled to the desired temperature for the regeneration. Accurate regulation of the temperature is possible by cooling the majority of the gases to below the desired temperature and admixing a small stream of hot gas. Also the gas for the reoxidation can be regenerated with this system, in the same manner as described above.

The advantage of using this system is that no ventilator and recycle gas cooler are necessary, while continuous performance is possible via a discharge stream to the chimney, if no regeneration takes place.

The invention will be further explained with reference to three figures, in which Figure 1 shows a scheme of an embodiment of the invention and Figure 2 shows another embodiment. Figure 3 shows the results of some experiments.

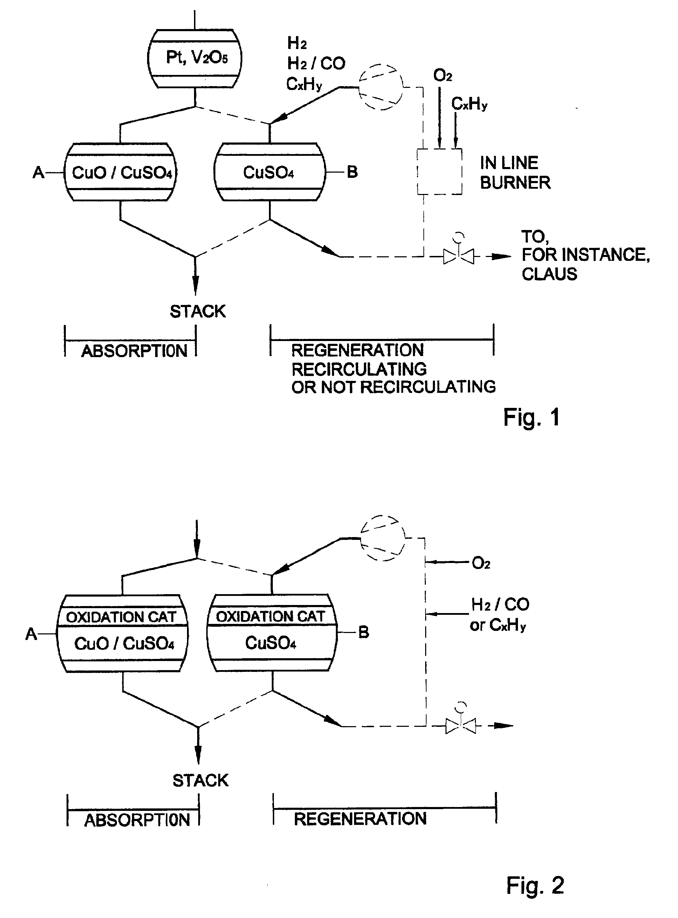

Figure 1 shows an embodiment of the method according to the invention, wherein, in the first instance, the gas mixture to be treated is passed over an oxidation catalyst, which is, for instance, based on platinum or vanadium pentoxide. The gas stream from the catalyst bed is then passed over the absorption bed designated in Figure 1 by A. In the illustrated case the absorbent is based on copper oxide which, during the absorption, is converted to copper sulfate. In the illustrated system the waste gas from the absorption bed is then discharged to the atmosphere. Figure 1 also shows a second bed with absorbent, which forms part of the regeneration cycle. The loaded absorbent consisting of copper sulfate, which bed is designated as B, is regenerated in a recirculation system with a reducing gas, for instance hydrogen, a combination of hydrogen and carbon monoxide or a hydrocarbon.

During regeneration an in-line burner may serve, if necessary, for heating purposes, but will hardly, if at all, be necessary in this function. The gas content of the insulated circulation system is rather small. The absorption bed connected in the regeneration loop is already at the required temperature. Additional heat is released by the regeneration or preoxidation reaction. During direct reduction with (cold) hydrocarbon gas so little gas is added (in connection with the explosion limits) that practically no cooling occurs.

An in-line burner provides the generation of $H_2$/CO for the regeneration as well as for the inertization of the circulation system and oxidation of the reduced absorbent.

The in-line burner for heating may possibly be useful for maintaining the required temperature of an absorption bed which, after regeneration, is not immediately used for absorption. It is also possible, however, to connect this bed after the active bed, so that it remains at the required temperature and can immediately take over the absorption if the first bed is saturated.

The waste gas from the regeneration, which contains large amounts of sulfur oxides, may be discharged, for instance to a Claus installation.

In the system shown in Figure 2 the same principle is used per se. But now the oxidation catalyst is located as a separate layer in the same reactor in which the absorbent is also contained, while no burner is used in the system. The reducing gas comes from an external reformer.

The method according to the invention can be advantageously used in conjunction with Claus technology and for treating flue gases. In particular for Claus tail gas, or gas from a Claus tail gas treatment, the method has advantages. In such a use, it is advantageous to carry out the regeneration in a closed recirculation system, with a discharge of a stream containing a relatively large amount of $SO_2$. This stream may then be processed in the Claus unit.

The regeneration may be carried out in various ways, which will also be explained below in more detail with reference to the figures.

When using the invention for flue gas desulfurization, there are substantially the same possibilities of carrying out the method. But in general there is no possibility to supply the $SO_2$ to a sulfur processing unit. Instead thereof, the $SO_2$ can be processed, for instance on the spot, into sulfuric acid, or it can be condensed and further processed elsewhere.

The invention will now be explained in detail on the basis of a specific embodiment, but without limiting thereto.

Before the beginning of the method the absorption material must be brought into an oxidic form so as to enable the absorption of oxidic sulfur compounds. In this example the absorption medium is copper oxide arranged on silicon dioxide, for instance as described in American patent 5,516,498. The absorption medium, which, in the first instance, is present on the silicon dioxide partly in metallic form as copper, is treated with molecular oxygen and converted to copper(II) oxide.

When the absorption medium is oxidized, the absorption of sulfur compounds can take place. "Tail gas" from the incinerator of a Claus or a Superclaus™ unit is supplied to a device, based on the principle as described in Figure 2. The gas stream has a temperature of 500°C and is supplied to the reactor which, at that moment, is in the absorption phase. A second reactor is regenerated at that moment.

In the reactor the gas first flows through a layer of a catalyst promoting the formation of $SO_3$ from $SO_2$. This is desired because $SO_3$ and $SO_2$ differently react with the absorption material arranged below the catalyst. Without the formation of $SO_3$ it was found that appreciably more absorption material was necessary to bind $SO_2$ to the copper oxide.

As soon as the absorbent is completely loaded, $SO_2$ will appear in the exhaust gas. This is detected by analysis apparatus in the exhaust of the first reactor. At that moment the gas stream to be treated is changed over to the regenerated second reactor, while the first reactor is regenerated in a closed recirculation system.

A reducing medium is added to a gas stream circulating over the first reactor. In this case the reducing component is methane. By adding the reducing component the resulting copper sulfate is disintegrated into metallic copper, $SO_2$ and some other reaction products.

$$2\ CuSO_4 + CH_4 \Rightarrow 2\ Cu + 2SO_2 + CO_2 + 2H_2O$$

The pressure in the closed system will rise because of the increase of the amount of components so that the pressure regulator in the discharge line will become active and will maintain a pressure of 0.7 bar excess pressure. A circulation compressor then brings the pressure at 0.8 bar excess pressure again to ensure that the gas circulates. This continues for a period of about 2 hours at a temperature of 500°C with a methane content at the reactor inlet of maximally 2 vol.%. This must ensure that the lowermost explosion limit for $CH_4$ is not reached. After 2 hours all the $SO_2$ has been removed from the absorption medium and returned the sulfur recovery unit.

Subsequently, the reduced absorption material, metallic copper, must be oxidized again. During oxidation the circulation over the first reactor is maintained and the pressure regulator remains active. The supply of methane is stopped and oxygen-containing gas is supplied to the circulation. For this method the temperature of the reactor is slightly reduced to about 400°C, for instance by an air cooler. In this case the temperature reduction is necessary to make allowance for the strongly exothermic reaction of oxygen with copper. For each vol.% oxygen in the reactor feed gas the temperature over the reactor bed can rise by about 100°C. For this reason the amount of oxygen at the reactor inlet is preferably limited to 1 vol.%. The oxidation is continued for 1 hour, which means that the total regeneration lasts 3 hours. After regeneration the closed circulation of the regenerated reactor forms part again of the sulfur removal process.

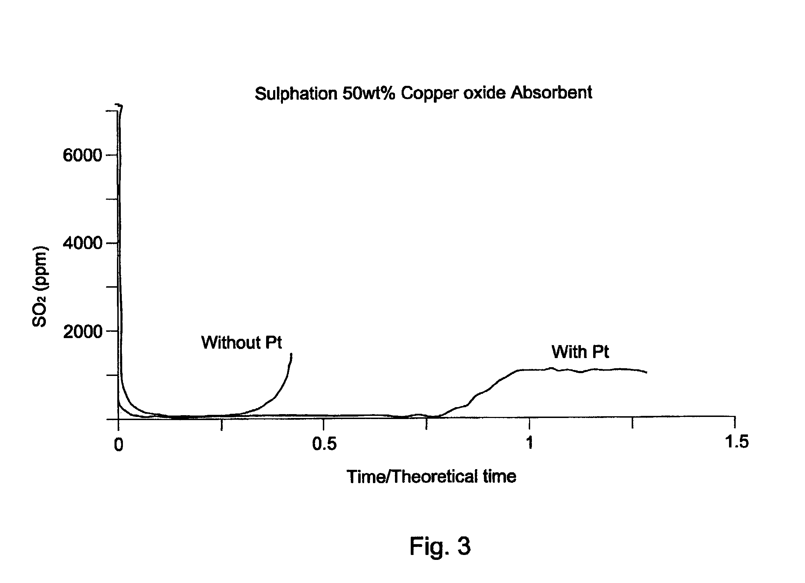

The invention will now be explained on the basis of some examples. In a system as described above in detail on the basis of Figure 2 a 50 wt.% copper oxide on silica absorbing agent is used. In the first instance, only copper oxide is used, without preceding oxidation catalyst (comparative example). In the annexed Figure 3 the course of the $SO_2$ content in the outlet of the reactor is expressed in arbitrary time units.

Subsequently, a bed of 1 wt.% platinum on silica is installed on top of the absorption bed, so that the gas is first passed through the catalyst. In the same Figure 3 the course of the $SO_2$ content in the outlet is also shown. From this it is apparent that by using a preceding layer of oxidation catalyst a substantially improvement of the sulfur absorption of the absorbent is obtained.

## Claims

1. A method for removing sulfur compounds from gas mixtures containing sulfur compounds, which comprises the at least partial oxidation of said sulfur compounds to oxidic sulfur compounds, at least part of which is converted to $SO_3$, and the absorption of the resulting oxidic sulfur compounds on a suitable absorbent, whereby in case the oxidation occurs catalytically in one bed of catalyst and absorbent, the catalyst is not based on a metal from the platinum group.

2. A method according to claim 1, wherein said oxidation takes place catalytically.

3. A method according to claim 1 of 2, wherein the absorbent is based on a compound forming regenerable sulfates, which compound is arranged on a carrier which substantially does not react with $SO_2$ and/or $SO_3$.

4. A method according to claims 1-3, wherein the absorbent is based on an oxide of Cu, Ce and/or Fe.

5. A method according to claims 2-4, wherein the catalyst for the oxidation is based on vanadium, iron oxide, Cu-Bi oxide of a metal from the platinum group.

**6.** A method according to claims 2-5, wherein the catalytic oxidation and the absorption take place in separate beds.

**7.** A method according to claim 6, wherein both beds are arranged in the same reactor, and the bed with catalyst is located on top of the bed with absorbent.

**8.** A method according to claims 1-7, wherein the catalytic oxidation and the absorption take place in the same bed.

**9.** A method according to claims 1-8, wherein the absorbent, if loaded with oxidic sulfur compounds, is regenerated in a recirculation system with substoichiometrically burned hydrocarbons, or with reformer gas.

**10.** A method according to claim 9, wherein after termination of the regeneration with substoichiometrically burned hydrocarbons the oxygen/hydrocarbon ratio is increased so as to reoxidize the absorbent.

**11.** A method according to claims 1-10, wherein the gas mixture comes from a Claus tail gas processing unit, which gas mixture is catalytically oxidized to form a gas mixture containing, inter alia, $SO_3$ and $SO_2$.

**12.** A method according to claims 1-11, wherein the absorbent contains 5 to 75 wt.% absorbing material, such as metal oxide, and for the rest carrier.

**13.** A method according to claim 12, wherein the metal oxide in reduced form has a particle size of 5 to 200 nm.

**14.** A method according to claims 1-13, wherein the absorption is carried out at a temperature of 250-550°C.

**15.** A method according to claims 1-14, wherein the regeneration is carried out at a temperature of 250-550°C.

**16.** A method according to claims 1-15, wherein the oxidation of the regenerated absorbent is carried out at a temperature of 250-550°C.

Fig. 1

Fig. 2

EP 1 116 511 A1

Sulphation 50wt% Copper oxide Absorbent

Fig. 3

**European Patent Office**

## EUROPEAN SEARCH REPORT

Application Number

EP 00 20 0168

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 93 21107 A (MOBIL OIL CORPORATION) 28 October 1993 (1993-10-28) * page 5, line 29 - page 6, line 32 * * page 12, line 21 - page 19, line 10; examples 1-4 * | 1-5,8,9, 11-15 | B01D53/50 B01D53/86 C01B17/60 |
| X | US 5 514 351 A (BUCHANAN ET AL) 7 May 1996 (1996-05-07) * column 5, line 7 - column 9, line 11; example 1 * | 1-5,8,9, 11-15 | |
| X | US 5 591 417 A (BUCHANAN ET AL) 7 January 1997 (1997-01-07) * column 5, line 14 - column 7, line 11 * * column 10, line 40 - column 11, line 25; example 1 * | 1-5,8,9, 11-15 | |
| X | US 5 728 358 A (AVIDAN ET AL) 17 March 1998 (1998-03-17) * column 5, line 18 - column 10, line 52 * | 1-5,8,9, 11,13-15 | |
| X | US 5 492 684 A (BUCHANAN ET AL) 20 February 1996 (1996-02-20) * column 4, line 45 - column 8, line 51 * | 1-5,8,9, 11,13-15 | TECHNICAL FIELDS SEARCHED (Int.Cl.7) B01D C01B |
| X | US 4 612 177 A (KRETCHMER ET AL) 16 September 1986 (1986-09-16) * column 4, line 10 - column 13, line 54 * | 1,3,14 | |
| X | US 5 658 541 A (MATROS ET AL) 19 August 1997 (1997-08-19) * column 5, line 45 - column 9, line 30 * | 1,2,6 | |

The present search report has been drawn up for all claims

| Place of search | Date of completion of the search | Examiner |
|---|---|---|
| THE HAGUE | 25 May 2000 | Doolan, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**EP 1 116 511 A1**

## ANNEX TO THE EUROPEAN SEARCH REPORT
## ON EUROPEAN PATENT APPLICATION NO.

EP 00 20 0168

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2000

| Patent document cited in search report | | Publication date | Patent family member(s) | | Publication date |
|---|---|---|---|---|---|
| WO 9321107 | A | 28-10-1993 | US | 5229091 A | 20-07-1993 |
| | | | US | 5292492 A | 08-03-1994 |
| | | | AU | 4103793 A | 18-11-1993 |
| | | | CA | 2118120 A | 28-10-1993 |
| | | | EP | 0636107 A | 01-02-1995 |
| | | | JP | 7505856 T | 29-06-1995 |
| | | | SG | 44573 A | 19-12-1997 |
| | | | US | 5591417 A | 07-01-1997 |
| | | | US | 5458861 A | 17-10-1995 |
| | | | US | 5514351 A | 07-05-1996 |
| | | | US | 5547648 A | 20-08-1996 |
| | | | US | 5728358 A | 17-03-1998 |
| US 5514351 | A | 07-05-1996 | US | 5292492 A | 08-03-1994 |
| | | | US | 5229091 A | 20-07-1993 |
| | | | AU | 4103793 A | 18-11-1993 |
| | | | CA | 2118120 A | 28-10-1993 |
| | | | EP | 0636107 A | 01-02-1995 |
| | | | JP | 7505856 T | 29-06-1995 |
| | | | SG | 44573 A | 19-12-1997 |
| | | | WO | 9321107 A | 28-10-1993 |
| | | | US | 5591417 A | 07-01-1997 |
| | | | US | 5458861 A | 17-10-1995 |
| | | | US | 5547648 A | 20-08-1996 |
| | | | US | 5728358 A | 17-03-1998 |
| US 5591417 | A | 07-01-1997 | US | 5229091 A | 20-07-1993 |
| | | | US | 5547648 A | 20-08-1996 |
| | | | US | 5458861 A | 17-10-1995 |
| | | | US | 5514351 A | 07-05-1996 |
| | | | US | 5728358 A | 17-03-1998 |
| | | | AU | 4103793 A | 18-11-1993 |
| | | | CA | 2118120 A | 28-10-1993 |
| | | | EP | 0636107 A | 01-02-1995 |
| | | | JP | 7505856 T | 29-06-1995 |
| | | | SG | 44573 A | 19-12-1997 |
| | | | WO | 9321107 A | 28-10-1993 |
| US 5728358 | A | 17-03-1998 | US | 5229091 A | 20-07-1993 |
| | | | US | 5591417 A | 07-01-1997 |
| | | | US | 5458861 A | 17-10-1995 |
| | | | US | 5514351 A | 07-05-1996 |
| | | | US | 5547648 A | 20-08-1996 |
| | | | AU | 4103793 A | 18-11-1993 |
| | | | CA | 2118120 A | 28-10-1993 |
| | | | EP | 0636107 A | 01-02-1995 |

EPO FORM P0459

For more details about this annex : see Official Journal of the European Patent Office, No. 12/82

10

## ANNEX TO THE EUROPEAN SEARCH REPORT
## ON EUROPEAN PATENT APPLICATION NO.

EP 00 20 0168

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2000

| Patent document cited in search report | | Publication date | Patent family member(s) | | Publication date |
|---|---|---|---|---|---|
| US 5728358 | A | | JP 7505856 T<br>SG 44573 A<br>WO 9321107 A | | 29-06-1995<br>19-12-1997<br>28-10-1993 |
| US 5492684 | A | 20-02-1996 | NONE | | |
| US 4612177 | A | 16-09-1986 | NONE | | |
| US 5658541 | A | 19-08-1997 | NONE | | |

EPO FORM P0459

For more details about this annex : see Official Journal of the European Patent Office, No. 12/82